(19) **Europäisches Patentamt**

**European Patent Office**

**Office européen des brevets**

(11) **EP 1 119 698 B1**

(12) **EUROPÄISCHE PATENTSCHRIFT**

(45) Veröffentlichungstag und Bekanntmachung des Hinweises auf die Patenterteilung:
**09.10.2002 Patentblatt 2002/41**

(51) Int Cl.[7]: **F02D 41/22**, F02B 37/12, F02D 23/00

(21) Anmeldenummer: **99946055.3**

(22) Anmeldetag: **28.08.1999**

(86) Internationale Anmeldenummer:
**PCT/EP99/06342**

(87) Internationale Veröffentlichungsnummer:
**WO 00/019079 (06.04.2000 Gazette 2000/14)**

(54) **REGELUNGSVERFAHREN FÜR EINE AUFGELADENE BRENNKRAFTMASCHINE**

METHOD FOR CONTROLLING A SUPER-CHARGED INTERNAL COMBUSTION ENGINE

PROCEDE DE REGULATION POUR UN MOTEUR A COMBUSTION INTERNE TURBOCOMPRESSE

(84) Benannte Vertragsstaaten:
**FR GB IT**

(30) Priorität: **26.09.1998 DE 19844212**

(43) Veröffentlichungstag der Anmeldung:
**01.08.2001 Patentblatt 2001/31**

(73) Patentinhaber: **DaimlerChrysler AG**
**70567 Stuttgart (DE)**

(72) Erfinder: **SCHMID, Wolfram**
**D-72622 Nürtingen (DE)**

(74) Vertreter: **Dahmen, Toni, Dipl.-Ing.**
**DaimlerChrysler AG,**
**FTP, C 106**
**70546 Stuttgart (DE)**

(56) Entgegenhaltungen:
**GB-A- 2 318 193**    **US-A- 4 660 382**
**US-A- 5 546 795**    **US-A- 5 680 763**

**Beschreibung**

Die Erfindung betrifft ein Regelungsverfahren für eine aufgeladene Brennkraftmaschine nach dem Oberbegriff des Anspruches 1 oder 2.

Aus der DE 40 25 901 C1 ist ein Abgasturbolader für eine Brennkraftmaschine bekannt, der eine Turbine mit einer über einen variablen Turbinenleitapparat veränderlich einstellbaren Turbinengeometrie und einen von der Turbine angetriebenen Verdichter zur Erhöhung des Ladedrucks im Zylindereinlaß aufweist. Der Turbinenleitapparat kann mit Hilfe eines Stellglieds so eingestellt werden, daß der wirksame Turbinenquerschnitt der Turbine verändert wird. Hierdurch ist es möglich, je nach Betriebszustand der Brennkraftmaschine verschieden hohe Abgasgegendrücke im Abschnitt zwischen den Zylindern und dem Abgasturbolader zu realisieren, wodurch die Leistung der Turbine und die Leistung des Verdichters je nach Bedarf eingestellt werden können. Der Turbinenleitapparat wird gemäß vorgegebenen Kennlinien auf einen Soll-Ladedruck geregelt.

Um im Instationärbetrieb der Brennkraftmaschine mit einfachen Mitteln eine Verbesserung des Wirkungsgrades zu erzielen, erfolgt die Ladedruckregelung unterhalb und oberhalb eines Schwellwertes für den Abgasgegendruck nach unterschiedlichen Kennlinien. Damit kann verhindert werden, daß es nach einem positiven Lastwechsel noch während des Anstiegs des Ladedrucks zu unkontrollierten Druckerhöhungen in der Abgasleitung stromauf der Turbine kommt. Die Brennkraftmaschine muß nicht mehr gegen einen erhöhten Abgasgegendruck ausschieben, der Wirkungsgrad ist erhöht.

Aus der Druckschrift US-A-5 680 763 ist ein Regelungsverfahren für eine aufgeladene Brennkraftmaschine bekannt, bei welchem zur Regelung des Ladedrucks auf einen vorgegebenen Sollwert ein PID-Regler mit proportionalem, integralem und differentiellem Anteil eingesetzt wird. Das vom PID-Regler erzeugte Signal wird zur Einstellung eines Bypass-Ventiles herangezogen, welches in einem Bypass zur Abgasturbine angeordnet ist. Hierdurch kann der Abgasgegendruck und damit auch die Laderleistung beeinflußt werden.

Da der Ladedruck in wesentlichem Maße den Fahrzeugbetrieb in der befeuerten Antriebsbetriebsweise und insbesondere bei schweren Nutzfahrzeugen auch im Motorbremsbetrieb bestimmt, muß die Funktionstüchtigkeit des Reglers bzw. der bei der Regelung beteiligten Komponenten regelmäßig überprüft werden.

Ergänzend wird zum Stand der Technik noch auf die Druckschrift GB-A-2 318 193 hingewiesen, aus der ein Verfahren zur Fehlererkennung bei einer Brennkraftmaschine bekannt ist, bei welchem ein Fehler für den Fall erkannt wird, daß der Ladedruck um einen unzulässig hohen Wert von einer Sollgröße abweicht. Es handelt sich hierbei aber um eine ungeregelte, kennliniengesteuerte Einstellung des Ladedrucks, welche im Vergleich zu einer geregelten Einstellung nur ungenau arbeitet. Eine Regelung des Ladedrucks ist in der GB-A-2 318 193 jedoch nicht offenbart.

Der Erfindung liegt das Problem zugrunde, die Ladedruck-Regelung in einer aufgeladenen Brennkraftmaschine mit einfachen Mitteln zu überwachen und ggf. eine Funktionsstörung anzuzeigen.

Dieses Problem wird erfindungsgemäß mit den Merkmalen des Anspruches 1 bzw. 2 gelöst.

Bei dem neuartigen Regelungsverfahren gemäß Patentanspruch 1 wird von einem PID-Regler zur Einstellung des Soll-Ladedrucks ausgegangen. Der Integrationsanteil des PID-Integrationsglieds wächst üblicherweise mit der Zeit kontinuierlich an. Dieser Integrationsanteil wird nun erfindungsgemäß mit einem Toleranzband verglichen, welches als idealer Integrator-Mittelwert mit einem beidseitigen Toleranzwert vorgegeben wird. Überschreitet bzw. unterschreitet der Integrationsanteil das Toleranzband, so liegt ein fehlerhafter Betriebszustand vor und es wird ein Fehlersignal erzeugt, anhand dessen der Fehlerzustand bei der Regelung der aufgeladenen Brennkraftmaschine identifiziert werden kann. Dieser Fehlerzustand kann als Fehler geringer Schwere klassifiziert werden, solange lediglich der Integrationsanteil außerhalb des Toleranzbandes liegt, im übrigen aber die Regelabweichung des Integrationsgliedes noch etwa Null beträgt, der PID-Regler also noch in der Lage ist, auf den vorgegebenen Ladedruck-Sollwert zu regeln.

Dieses Verfahren hat den Vorteil, daß Fehler eindeutig und sicher im laufenden Betrieb ohne zusätzliche Maßnahmen wie beispielsweise Werkstatteingriffe mit zusätzlichen Testprozeduren identifiziert werden können.

Das Verfahren kann in besonders vorteilhafter Weise mit dem Regelungsverfahren nach Anspruch 2 kombiniert werden, gemäß dem ebenfalls ein PID-Regler eingesetzt wird und eine Regelabweichung durch Vergleich mit einem Grenzwert erkannt und zur Erzeugung eines Fehlersignals herangezogen wird. Dieser Fehlerzustand kann als schwerer Fehler klassifiziert werden, da eine bleibende Regelabweichung, die bei Verwendung eines Integrationsglieds bei korrekter Funktionsweise nicht auftreten darf, eine Einstellung auf den gewünschten Soll-Ladedruck unmöglich macht.

Die Kombination von Überwachung des Integrationsfehlers und der Regelabweichung repräsentiert ein vollständiges Sicherheitskonzept, das ohne zusätzlichen Hardwareaufwand wie Sensoren oder ähnliches auskommt und mit geringem Aufwand realisiert werden kann. Dabei kann die Überwachung in zwei Stufen erfolgen, indem zunächst in einer ersten Stufe der Integrationsanteil überprüft und in einer zweiten Stufe auch die Regelabweichung für den Fall überprüft wird, daß der Integrationsanteil außerhalb des zulässigen Bereiches liegt.

Im Fehlerfall wird ein Fehlersignal erzeugt, das zweckmäßig in die Motorsteuerungs- und -regelungseinrichtung der Brennkraftmaschine eingetragen wird.

Sowohl im Fehlerfall der ersten Stufe als auch im Fehlerfall der zweiten Stufe wird jeweils ein Fehlersignal erzeugt, wobei die Fehlerart vorteilhaft über spezielle Markierungen der Fehlersignale zu differenzieren ist.

Das Differentialglied des PID-Regler kann gegebenenfalls auf Null gesetzt werden. In diesem Fall reduziert sich der Regler auf einen PI-Regler.

Das Regelungsverfahren wird bevorzugt in Kombination mit einer Abgasturbine mit variabler Turbinengeometrie eingesetzt, die zur Ladedruckregelung herangezogen werden kann, indem die variable Stellvorrichtung der Turbinengeometrie gemäß vorgegebenen Ladedruck-Kennfeldern bis zur Einstellung des Soll-Ladedrucks verstellt wird.

Weitere Vorteile und zweckmäßige Ausführungsformen sind den weiteren Ansprüchen, der Figurenbeschreibung und den Zeichnungen zu entnehmen. Es zeigen:

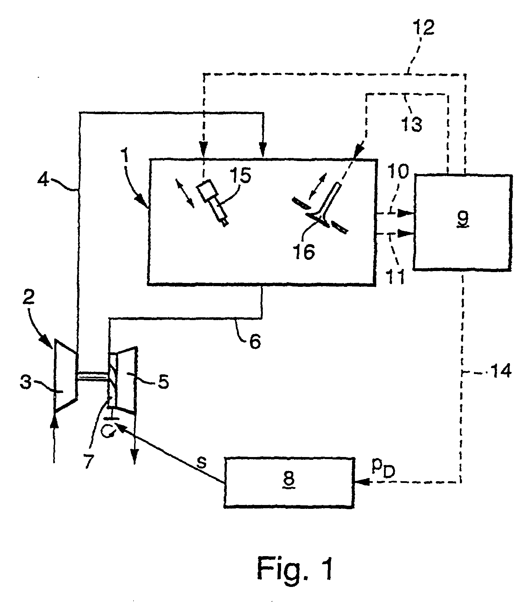

Fig. 1   eine schematische Ansicht einer aufgeladenen Brennkraftmaschine mit Ladedruckregelung,

Fig. 2   ein Blockschaltbild einer Ladedruckregelung,

Fig. 3   ein Ablaufdiagramm zur Fehlerüberprüfung.

Die Brennkraftmaschine 1 in einem Kraftfahrzeug, beispielsweise eine Diesel-Brennkraftmaschine in einem Nutzfahrzeug, weist einen Abgasturbolader 2 mit einem Verdichter 3 im Ansaugtrakt 4 und eine Abgasturbine 5 im Abgasstrang 6 auf. Der Verdichter 3, der einen erhöhten Ladedruck am Zylindereinlaß der Brennkraftmaschine 1 erzeugt, ist über eine Welle mit der Turbine 5 verbunden, welche vom Abgasstrom der Brennkraftmaschine angetrieben wird.

Die Turbine 5 ist mit einer variablen, verstellbaren Turbinengeometrie ausgestattet, die im Ausführungsbeispiel als radiales Leitgitter 7 mit verstellbaren Leitschaufeln ausgeführt ist und von einem Aktuator 8 auf die gewünschte Leitgitterposition eingestellt wird. Alternativ zu einem radialen Leitgitter kann die variable Turbinengeometrie auch als Axialschieber realisiert sein. Gegebenenfalls kommen auch Klappenturbinen oder sonstige Varioturbinentypen zum Einsatz, die eine variable Einstellung des wirksamen Turbinenquerschnitts oder in sonstiger Weise eine Beeinflussung des auf das Turbinenrad treffenden Abgasmassenstromes ermöglichen.

Dem Fahrzeug ist eine Motorregelung und -steuerung 9 zur Regelung und Steuerung der Fahr- und Betriebszustände der Brennkraftmaschine 1, des Abgasturboladers 2 und gegebenenfalls weiterer Komponenten wie Getriebe etc. unterlagert. Die Motorregelung und -steuerung 9 kommuniziert über Signalleitungen 10 bis 14 mit diversen Motorkomponenten. Über die Signalleitungen 10, 11 empfängt die Motorregelung und -steuerung 9 als Eingangssignale Motorzustands- und -betriebsgrößen, insbesondere die Motorlast ML sowie die Motordrehzahl n. Aus den Eingangssignalen generiert die Motorregelung und -steuerung 9 gemäß einer hinterlegten Transformationsvorschrift, beispielsweise einem Regelgesetz, sowie in Abhängigkeit abgespeicherter Kennfelder Ausgangssignale, die über weitere Signalleitungen 12, 13, 14 den einzustellenden Motorkomponenten zugeführt werden. Über die Signalleitungen 12, 13 steuert die Motorregelung und -steuerung 9 die Funktionsweise der Einspritzdüsen 15 sowie der Ventile 16 der Brennkraftmaschine 1. Über die Signalleitung 14 wird dem Aktuator 8 ein Steuerdruck $p_D$ zugeführt, der im Aktuator 8 in einen Stellweg s zur Einstellung der variablen Turbinengeometrie umgesetzt wird.

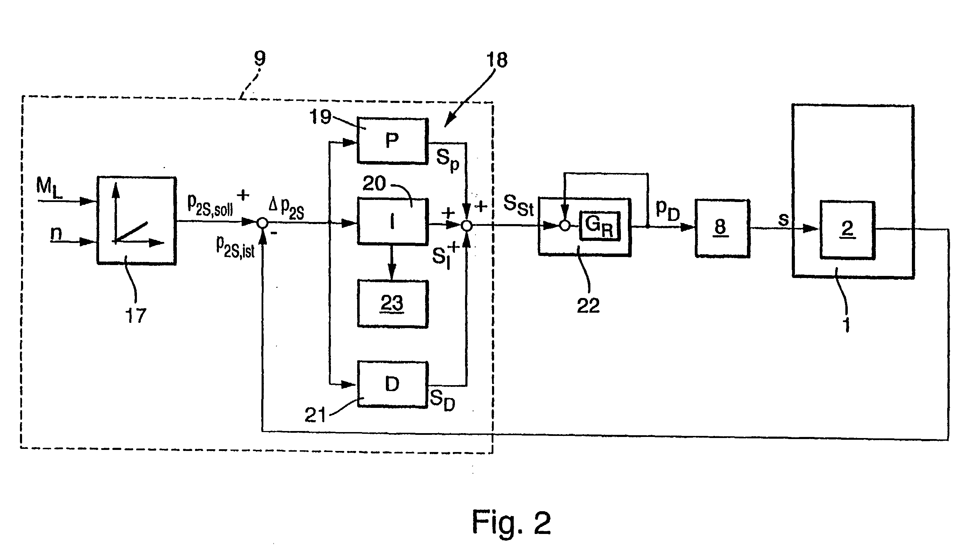

In dem Blockschaltbild gemäß Fig. 2 ist die Regelung des Abgasturboladers 2 dargestellt. Die Motorsteuerung und -regelung 9 umfaßt ein Kennfeld 17 und einen PID-Regler 18, der sich additiv aus den einzelnen Komponenten Proportionalglied 19, Integralglied 20 und Differentialglied 21 zusammensetzt. Der Motorsteuerung und -regelung 9 werden als Eingangssignale die Motorlast ML und die Motordrehzahl n zugeführt, aus denen im Kennfeld 17 der Soll-Ladedruck $p_{2S,soll}$ für den Ansaugtrakt der Brennkraftmaschine stromab des Verdichters ausgelesen wird. Aus dem Soll-Ladedruck $p_{2S,soll}$ wird durch Subtraktion des gemessenen Ladedruck-Istwerts $p_{2S,ist}$ die Regelabweichung $\Delta p_{2S}$ gebildet, die als Eingangssignal dem PID-Regler 18 zugeführt wird. Der PID-Regler liefert gemäß dem Regelgesetz

$$S_{St} = S_P + S_I + S_D$$

das pulsweitenmodulierte Stellsignal $S_{St}$, bestehend aus den den einzelnen Gliedern 19, 20, 21 des Reglers zugeordneten Anteilen SP, SI und SD, welche aus den Komponenten des PID-Reglers gemäß den Beziehungen

$$S_P = K_P \ast \Delta p_{2S}$$

$$S_I = K_I \ast \int \Delta p_{2S}\, dt$$

$$S_D = K_D \ast d/dt(\Delta p_{2S})$$

ermittelt werden. Kp, KI und KD bezeichnen hierin Verstärkungsfaktoren des Proportionalgliedes 19, des Integralgliedes 20 bzw. des Differentialgliedes 21.

Das Stellsignal Sst wird als Eingangssignal einem Wandler 22 zugeführt wird, in dem als Ausgangssignal ein Steuerdruck $p_D$ erzeugt wird.

Es kann zweckmäßig sein, dem Wandler 22 eine Regelung GR zu unterlegen, um Schwankungen in der Druckversorgung zu kompensieren, so daß Druckschwankungen sich nicht auf den generierten Steuerdruck P$_D$ auswirken können.

Der Steuerdruck p$_D$ wird als Eingangssignal dem Aktuator 8 zugeführt, der den Stellweg s für die variable Turbinengeometrie im Abgasturbolader 2 der Brennkraftmaschine 1 erzeugt.

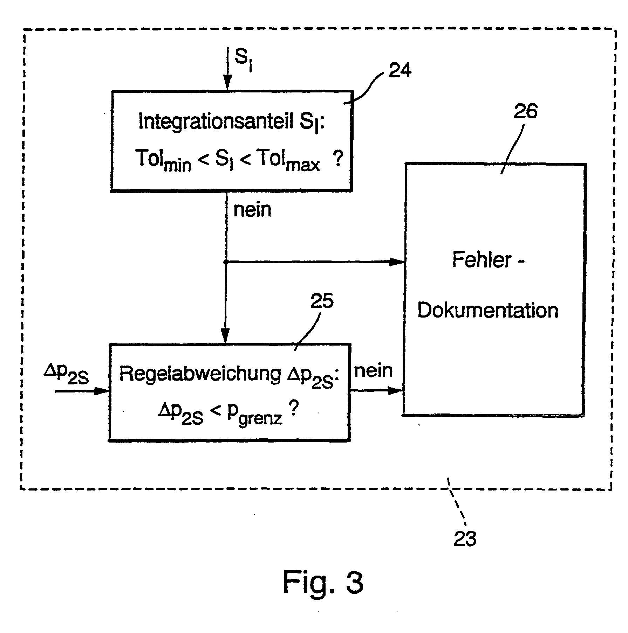

Dem Integrationsglied 20 des PID-Reglers 18 ist ein Fehlerblock 23 zugeordnet, in dem eine fortlaufende Überprüfung des Betriebszustandes der Brennkraftmaschine anhand des Integrationsanteils SI des PID-Reglers sowie anhand der Regelabweichung Δp$_{2S}$ vorgenommen und eventuell auftretende Fehler registriert werden. Der Aufbau und die Funktionsweise des Fehlerblocks 23 ist in Fig. 3 im einzelnen dargestellt.

Gemäß Fig. 3 besteht der Fehlerblock 23 aus mehreren Verarbeitungs- und Speichereinheiten 24 bis 26. In einer ersten Verarbeitungseinheit 24 wird überprüft, ob der im Integrationsglied 20 erzeugte Integrationsanteil SI innerhalb eines Toleranzbandes liegt, das von einem unteren, vorgebbaren Toleranzwert Tolmin und einem oberen, vorgebbaren Toleranzwert Tolmax begrenzt ist.

Liegt der Integrationsanteil SI innerhalb des Toleranzbandes, so liegt kein fehlerhafter Betriebszustand vor. Die Fehlerüberprüfung kann gemäß einer ersten Ausführung abgebrochen und der Regelbetrieb fortgesetzt werden. Gemäß einer zweiten Ausführung kann die Fehlerüberprüfung auch für denjenigen Fall in der folgenden Verarbeitungseinheit 25 fortgesetzt werden, daß der Integrationsanteil SI innerhalb des vorgegebenen Toleranzbandes liegt.

Liegt der Integrationsanteil SI außerhalb des Toleranzbandes, so liegt ein fehlerhafter Betriebszustand vor. Der Fehler wird in einer Speichereinheit 26 durch Eintragen des Integrationsanteils SI und des aktuellen Zeitpunktes dokumentiert und gegebenenfalls auch angezeigt.

Im Fehlerfall wird zweckmäßig die Überprüfung in der nachfolgenden Verarbeitungseinheit 25 fortgesetzt, in der eine Abfrage erfolgt, ob die Regelabweichung Δp$_{2S}$, die bei Verwendung eines Integrationsgliedes zu Null werden muß, kleiner ist als ein gegebener Grenzwert p$_{grenz}$. Ist dies der Fall, so liegt kein Fehler vor. Ist dagegen die Regelabweichung Δp$_{2S}$ größer als der Grenzwert p$_{grenz}$, so ist der Regler nicht in der Lage, den Ladedruck auf den vorgegebenen Soll-Ladedruck einzuregeln und es liegt eine bleibende Regelabweichung vor. Hierbei sind dynamische Einschwingvorgänge zu berücksichtigen, da eine bleibende Regelabweichung mit hinreichender Sicherheit nur im stationären Betriebszustand detektiert werden kann. Um instationäre Vorgänge ausschließen zu können, wird die Regelabweichung Δp$_{2S}$ zweckmäßig in mehreren aufeinanderfolgenden Zyklen untersucht.

Im Fall einer unzulässig hohen Regelabweichung erfolgt ein Fehlereintrag in die Speichereinheit 26.

Es kann angezeigt sein, in jedem Fall die Fehlerüberprüfung in den beiden Verarbeitungseinheiten 24 und 25 unabhängig voneinander vorzunehmen.

Es kann weiterhin angezeigt sein, anstelle eines PID-Reglers einen PI-Regler einzusetzen. Dies wird erreicht, indem der Verstärkungsfaktor K$_D$ des Differentialgliedes 21 auf Null gesetzt wird.

Der Integrationsanteil S$_I$ wird zweckmäßig als Integratorsumme dargestellt, die numerisch iterativ ermittelt werden kann und dem Vergleich mit dem Toleranzband zugrunde gelegt wird. Da die Integratorsumme über die Zeit stetig anwächst, muß das Toleranzband entsprechend dem aktuellen Zeitpunkt fortlaufend aktualisiert werden.

**Patentansprüche**

1. Regelungsverfahren für eine aufgeladene Brennkraftmaschine, bei dem Ladedruck-Istwerte (p$_{2S,ist}$) durch Einstellung eines veränderlichen, den Ladedruck beeinflussenden Bauteils eines Laders gemäß einem vorgegebenen Regelgesetz auf vorgegebene Ladedruck-Sollwerte (p$_{2s,soll}$) eingeregelt werden, wobei als Regelgesetz ein PID-Regler (18) verwendet wird,
   **dadurch gekennzeichnet,**
   **daß** der Integrationsanteil (S$_I$) im Integrationsglied (20) des PID-Reglers (18) mit einem vorgegebenen Toleranzband (Tol$_{min}$, Tol$_{max}$) verglichen wird und ein Fehlersignal erzeugt wird, falls der Integrationsanteil (S$_I$) außerhalb des Toleranzbandes- (Tol$_{min}$, Tol$_{max}$) liegt.

2. Regelungsverfahren für eine aufgeladene Brennkraftmaschine, insbesondere Regelungsverfahren nach Anspruch 1, bei dem Ladedruck-Istwerte (p$_{2S,ist}$) durch Einstellung eines veränderlichen, den Ladedruck beeinflussenden Bauteils eines Laders gemäß einem vorgegebenen Regelgesetz auf vorgegebene Ladedruck-Sollwerte (p$_{2S,soll}$) eingeregelt werden, wobei als Regelgesetz ein PID-Regler (18) verwendet wird,
   **dadurch gekennzeichnet ,**
   **daß** eine Regelabweichung (Δp$_{2S}$) zwischen dem Ladedruck-Sollwert (p$_{2S,soll}$) und dem Ladedruck-Istwert (p$_{2S,ist}$) gebildet wird und ein Fehlersignal erzeugt wird, wenn die Regelabweichung (Δp$_{2S}$) einen vorgebbaren Grenzwert (p$_{grenz}$) überschreitet.

3. Regelungsverfahren nach Anspruch 1 und 2,
   **dadurch gekennzeichnet,**
   **daß** sowohl der Integrationsanteil (S$_I$) als auch die Regelabweichung (Δp$_{2s}$) überwacht werden.

4. Regelungsverfahren nach einem der Ansprüche 1 bis 3,
   **dadurch gekennzeichnet,**
   **daß** der Integrationsanteil (S$_I$) näherungsweise als Integratorsumme dargestellt wird und die Integra-

torsumme mit dem Toleranzband ($Tol_{min}$, $Tol_{max}$) verglichen wird.

5. Regelungsverfahren nach einem der Ansprüche 1 bis 4,
   **dadurch gekennzeichnet,**
   **daß** ein erzeugtes Fehlersignal in der Motorregelung und -steuerung (9) abgespeichert wird.

6. Regelungsverfahren nach einem der Ansprüche 1 bis 5,
   **dadurch gekennzeichnet,**
   **daß** die Ladedruck-Regelung in Abhängigkeit der Last (ML) und der Motordrehzahl (n) erfolgt.

7. Regelungsverfahren nach einem der Ansprüche 1 bis 6,
   **dadurch gekennzeichnet,**
   **daß** das Differentialglied (21) des PID-Reglers (18) auf Null gesetzt wird.

8. Regelungsverfahren nach einem der Ansprüche 1 bis 7,
   **dadurch gekennzeichnet,**
   **daß** der PID-Regler (18) zur Regelung der Ladedruck-Istwerte ($p_{2S,ist}$) auf die Ladedruck-Sollwerte ($p_{2S,soll}$) eine variable Turbinengeometrie der Abgasturbine (5) beaufschlagt.

**Claims**

1. Regulation process for a supercharged internal combustion engine in which actual values of supercharge pressure ($p_{2s, actual}$) are adjusted, through setting of a component, of a supercharger, which variably influences the supercharge pressure, whereby a three-term controller (18) is used as a regulation principle,
   **characterized in that**
   the integration portion ($P_I$) in the integrating circuit (20) of the three-term controller (18) is compared with a set band of permissible variation ($Tol_{min}$, $Tol_{max}$) and an error signal is produced if the integration portion ($P_I$) lies outside of the range of permissible variation ($Tol_{min}$, $Tol_{max}$).

2. Regulation process for a supercharged internal combustion engine, particularly a regulation process in accordance with claim 1, in which actual values of supercharge pressure ($p_{2s, actual}$) are adjusted, through setting of a component, of a supercharger, which variably influences the supercharge pressure, whereby a three-term controller (18) is used as a regulation principle,
   **characterized in that**
   a deviation ($\Delta p_{2s}$) is formed between the required supercharge pressure ($p_{2s, required}$) and the actual supercharge pressure ($p_{2s, actual}$) and an error signal is produced if the deviation ($\Delta p_{2s}$) exceeds a threshold value ($p_{threshold}$) which can be set.

3. Regulation process in accordance with claims 1 and 2,
   **characterized in that**
   both the integration portion ($P_I$) and the deviation ($\Delta p_{2s}$) are monitored.

4. Regulation process in accordance with one of claims 1 to 3,
   **characterized in that**
   the integration portion ($P_I$) is represented approximately as the integrator summation and the integrator summation is compared to the permissible variation band ($Tol_{min}$, $Tol_{max}$).

5. Regulation process in accordance with one of claims 1 to 4,
   **characterized in that**
   an error signal produced is stored in the engine regulation and control means (9).

6. Regulation process in accordance with one of claims 1 to 5,
   **characterized in that**
   the regulation of supercharge pressure occurs on the basis of the load ($M_L$) and the rotational speed (n).

7. Regulation process in accordance with one of claims 1 to 6,
   **characterized in that**
   the differential element (21) of the three-term controller (18) is set to zero.

8. Regulation process in accordance with one of claims 1 to 7,
   **characterized in that**
   the three-term controller (18), for regulating the actual supercharge pressure values ($p_{2s, actual}$) to the required supercharge pressure values ($p_{2s, actual}$), acts on a variable turbine geometry of the exhaust turbine (5).

**Revendications**

1. Procédé de régulation pour un moteur à combustion interne à suralimentation, dans lequel on règle des valeurs de pression d'admission réelles ($p_{2S,réel}$) à des valeurs de pression d'admission de consigne prédéterminées ($p_{2S,consigne}$) par réglage d'un composant variable, influençant la pression d'admission, d'un compresseur selon une loi de régulation prédéterminée, en utilisant un régulateur PID (proportionnel par intégration et par différentiation) (18) à titre de loi de régulation, **caractérisé en ce que** l'on compare la proportion d'intégration ($S_I$) dans l'organe intégrateur (20) du régulateur PID (18) avec une bande de tolérances prédéterminée ($Tol_{min}$, $Tol_{max}$) et on génère un signal d'erreur au cas où la proportion d'intégration ($S_1$) est située à l'extérieur de la bande de tolérances ($Tol_{min}$, $Tol_{max}$).

2. Procédé de régulation pour un moteur à combustion interne à suralimentation, en particulier procédé de régulation selon la revendication 1, dans lequel on règle des valeurs de pression d'admission réelles ($p_{2S,réel}$) à des valeurs de pression d'admission de consigne prédéterminées ($p_{2S,consigne}$) par réglage d'un composant, variable influençant la pression d'admission, d'un compresseur selon une loi de régulation prédéterminée, en utilisant un régulateur PID (proportionnel par intégration et par différentiation) (18) à titre de loi de régulation, **caractérisé en ce que** l'on forme un écart de régulation ($\Delta p2S$) entre la valeur de pression d'admission de consigne ($p_{2s,consignc}$) et la valeur de pression d'admission réelle ($p_{2S.réel}$), et on génère un signal d'erreur lorsque l'écart de régulation ($\Delta p2S$) dépasse une valeur limite prédéterminée ($p_{limite}$).

3. Procédé de régulation selon les revendications 1 et 2, **caractérisé en ce que** l'on surveille aussi bien la proportion d'intégration ($S_I$) que l'écart de régulation ($\Delta p2S$).

4. Procédé de régulation selon l'une des revendications 1 à 3, **caractérisé en ce que** l'on représente la proportion d'intégration ($S_I$) approximativement comme somme d'intégration et on compare la somme d'intégration avec la bande de tolérances ($Tol_{min}$, $Tol_{max}$).

5. Procédé de régulation selon l'une des revendications 1 à 4, **caractérisé en ce que** l'on mémorise un signal d'erreur généré dans la régulation et dans la commande de moteur (9).

6. Procédé de régulation selon l'une des revendications 1 à 5, **caractérisé en ce que** la régulation de la pression d'admission s'effectue en fonction de la charge ($M_L$) et de la vitesse de rotation (n) du moteur.

7. Procédé de régulation selon l'une des revendications 1 à 6, **caractérisé en ce que** l'organe différentiel (21) du régulateur PID (18) est mis à zéro.

8. Procédé de régulation selon l'une des revendications 1 à 7, **caractérisé en ce que** pour la régulation des valeurs de pression d'admission réelles ($p_{2S,réel}$) aux valeurs de pression d'admission de consigne ($p_{2S,consigne}$), le régulateur PID (18) attaque une géométrie de turbine variable de la turbine à gaz d'échappement (5).

Fig. 1

Fig. 2

EP 1 119 698 B1

$S_I$

Integrationsanteil $S_I$:
$Tol_{min} < S_I < Tol_{max}$ ?
24

nein

26

Fehler -

Dokumentation

25

$\Delta p_{2S}$

Regelabweichung $\Delta p_{2S}$:
$\Delta p_{2S} < p_{grenz}$ ?
nein

23

Fig. 3